# EUROPÄISCHE PATENTSCHRIFT

(11) **EP 1 097 582 B1**
(45) Veröffentlichungstag und Bekanntmachung des Hinweises auf die Patenterteilung: **30.01.2002**
(21) Anmeldenummer: 99942754.5
(22) Anmeldetag: 01.07.1999
(51) Int. Cl.: H04N 7/14

(54) **BILDTELEFON**
VIDEOTELEPHONE
VIDEOTELEPHONE

(30) Priorität: 14.07.1998 DE 19831571
(43) Veröffentlichungstag der Anmeldung: 09.05.2001
(73) Patentinhaber: SIEMENS AKTIENGESELLSCHAFT, 80333 München (DE)
(72) Erfinder: SEYTTER, Fritz, D-81667 München (DE)
(86) Internationale Anmeldenummer: DE9901936
(87) Internationale Veröffentlichungsnummer: WO0004715

(56) Entgegenhaltungen:
- DE-A- 3 600 914
- DE-A- 19 736 675
- US-A- 5 537 175

## Beschreibung

Die Erfindung betrifft ein Bildtelefon gemäß dem Oberbegriff des Patentanspruchs 1.

Bildtelefone ermöglichen neben dem Audiokontakt einen visuellen Blickkontakt zu einem Kommunikationspartner. Sie weisen hierzu im allgemeinen ein Display auf, auf dem das beim Kommunikationspartner aufgenommene Bild wiedergegeben wird. Weiter ist eine Kamera vorgesehen, über die das Bild des Benutzers aufgezeichnet wird.

Insbesondere bei mobilen Bildtelefonen kann im Strahlengang der Kamera ein Umlenkspiegel vorgesehen sein. Der Umlenkspiegel ermöglicht beispielsweise in einer ersten Position einen freien Blick der Kamera in die Landschaft. In einer zweiten Position des Umlenkspiegels kann von der Kamera das Bild der Bedienperson aufgezeichnet werden, die in dieser Position gleichzeitig das Display betrachten kann.

Bei der Bildtelefonie ist es wichtig, die Position im Bildausschnitt für die Aufnahme kontrollieren zu können. Dies wird im allgemeinen durch zwei unterschiedliche Methoden erreicht. Bei der ersten Methode wird das Display auf Eigenbild geschaltet, wodurch für die Zeitdauer der Umschaltung ein Verlust: des Blickkontaktes mit dem Gesprächspartner einhergeht. Bei der zweiten Methode wird durch ein Bild-im-Bild-Verfahren innerhalb des Displays das Eigenbild eingeblendet. Hierbei wird ein Teil der Displayfläche für ein verkleinertes Eigenbild zur Verfügung gestellt.

Insbesondere bei der Verwendung eines mobilen Bildtelefons ist eine Kontrolle der Kameraposition in Bezug zur aufgenommen Bedienperson wichtig, weil hierbei sowohl der Abstand als auch der Blickwinkel zwischen Kamera und vorzugsweise dem Gesicht des Benutzers frei wählbar sind.

Aus DE-A-3 600 914 ist die Verwendung eines Umkehrspiegels bekannt. Bei dem aus US-A-5 537 175 bekannten Gerät sind auf der teilverspiegelten Linse der kamera Marhen vorgesehen.

Der Erfindung liegt die Aufgabe zugrunde ein Bildtelefon anzugeben, insbesondere ein mobiles Bildtelefon, bei dem in einfacher Weise eine Kontrolle der Kameraposition möglich ist.

Diese Aufgabe wird erfindungsgemäß durch die im Patentanspruch 1 angegebenen Merkmale gelöst.

Wenn die am Umlenkspiegel vorgesehenen Markierungen und die eingespiegelten Markierungen zur Deckung gebracht sind, so befindet sich die Bedienperson in einer optimalen Kameraposition zur Aufnahme. Hierdurch ist eine besonders einfache Methode gegeben, um die Position der Bedienperson optimal im Bezug zur Kamera einzustellen.

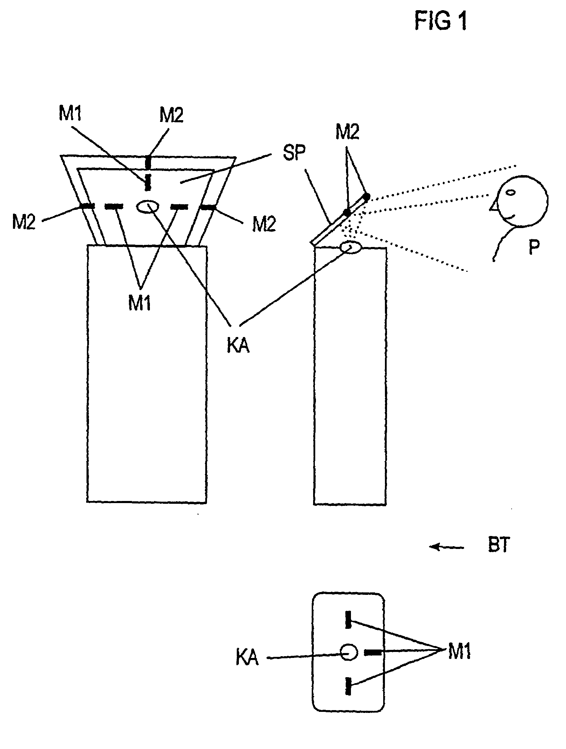

Im folgenden wird die Erfindung anhand eines in der Zeichnung dargestellten Ausführungsbeispieles beschrieben.

In der einzigen Figur ist in Front-, Seiten- und Aufsicht ein Bildtelefon BT dargestellt. Auf der Oberseite des Bildtelefons BT ist ein Umlenkspiegel SP vorgesehen, der beispielsweise schwenkbar am Gehäuse des Bildtelefons BT befestigt ist. In der zum Spiegel SP weisenden Oberseite des Bildtelefons BT ist eine Kamera KA angeordnet, die symbolisch durch eine Linse dargestellt ist.

Erfindungsgemäß sind erste Markierungen M1 vorgesehen, die beispielsweise in der Ebene der Kamera KA angeordnet sind. Bei dem gewählten Ausführungsbeispiel sind zwei der Markierungen rechts und links von der Kamera KA angeordnet, und eine weitere Markierung M1 in Richtung zu einer Bedienperson P. Die Bedienperson P befindet sich vorzugsweise auf der Seite des Bildtelefons BT, auf der eine (nicht dargestellte) Anzeigeeinrichtung vorgesehen ist.

An der Umrandung des Umlenkspiegels SP sind drei zweite Markierungen M2 vorgesehen. Diese befinden sich, von der Bedienperson P in Blickrichtung auf den Spiegel SP gesehen, ebenfalls links und rechts von der Kamera KA, sowie oberhalb davon.

Beim Aufklappen des Spiegels SP sieht die Bedienperson P die zweiten Markierungen M2 auf der Umrandung des Spiegels SP, und auf der Spiegelfläche selbst die gespiegelten ersten Markierungen M1. Durch Einstellen eines entsprechenden Neigungswinkels des Spiegels SP beziehungsweise durch eine Veränderung der Blickrichtung der Bedienperson P über den Umlenkspiegel SP zur Kamera KA, beispielsweise durch eine veränderte Handhaltung des Bildtelefons BT, werden die ersten Markierungen M1 und die zweiten Markierungen M2 zur Deckung gebracht. Hierdurch ist eine optimale Position der Bedienperson P in Bezug zur Kamera KA gegeben. Auf einfache Weise ist auch weiter eine laufende Kontrolle dieser Kameraposition gegeben.

## Patentansprüche

1. Bildtelefon (BT) mit einem, insbesondere beweglichen, Umlenkspiegel (SP), über den das Eigenbild einer Person (P) von einer Kamera (KA) aufnehmbar ist,
**gekennzeichnet durch**,
erste und zweite Markierungen (M1, M2) zur Festlegung der Position der Person (P) für das Eigenbild, wobei die ersten Markierungen am Bildtelefon (BT) und die zweiten Markierungen (M2) am Spiegel (SP) vorgesehen sind.

2. Bildtelefon (BT) nach Anspruch 1
**dadurch gekennzeichnet, daß**
die ersten Markierungen (M1) in der Ebene der Kamera (KA) und die zweiten Markierungen (M2) am Spiegelrand vorgesehen sind.

## Claims

1. Videophone (BT) having a, preferably movable, deflecting mirror (SP), by means of which, with regard to a person (P), said person's own picture can be recorded by a camera (KA),
**characterized by**
first and second markings (Ml, M2) for defining the position of the person (P) for said person's own picture, the first markings being provided on the videophone (BT) and the second markings (M2) being provided on the mirror (SP).

2. Videophone (BT) according to Claim 1,
**characterized in that**
the first markings (M1) are provided in the plane of the camera (KA) and the second markings (M2) are provided on the edge of the mirror.

## Revendications

1. Vidéotéléphone (BT) avec un miroir déflecteur (SP), en particulier mobile, par l'intermédiaire duquel la propre image d'une personne (P) peut être enregistrée par une caméra (KA),
**caractérisé en ce que** des premiers et deuxièmes repères (M1, M2) sont prévus pour fixer la position de la personne (P) en vue d'obtenir la propre image, les premiers repères étant prévus sur le vidéotéléphone (BT) et les deuxièmes repères (M2) sur le miroir (SP).

2. Vidéotéléphone (BT) selon la revendication 1,
**caractérisé en ce que** les premiers repères (M1) sont prévus dans le plan de la caméra (KA) et les deuxièmes repères (M2) sont prévus sur le bord du miroir.
